Europäisches Patentamt

European Patent Office

Office européen des brevets

(11) Publication number: **0 108 501**
**B1**

# EUROPEAN PATENT SPECIFICATION

(45) Date of publication of patent specification: **28.09.88**

(51) Int. Cl.⁴: **C 21 B 13/00, C 10 L 5/10**

(21) Application number: **83306033.8**

(22) Date of filing: **05.10.83**

(54) A method for producing a carbonaceous solid reductant for direct reduction of iron ore.

(30) Priority: **12.10.82 JP 178735/82**

(43) Date of publication of application:
**16.05.84 Bulletin 84/20**

(45) Publication of the grant of the patent:
**28.09.88 Bulletin 88/39**

(84) Designated Contracting States:
**DE FR GB NL**

(56) References cited:
**DE-A-3 015 710**
**FR-A- 325 077**
**FR-A-1 352 363**
**GB-A- 465 099**
**US-A-2 380 406**
**US-A-3 970 434**
**US-A-4 226 601**
**US-A-4 259 085**

(73) Proprietor: **SUMITOMO HEAVY INDUSTRIES, LTD**
**2-1 Ohtemachi 2-chome Chiyoda-ku**
**Tokyo 100 (JP)**

(72) Inventor: **Matsuoka, Toshio**
**10-221 Maedacho**
**Niihama-shi (JP)**
Inventor: **Sugimori, Seiji**
**755 Nakanokou**
**Saijo-shi (JP)**
Inventor: **Koyabu, Yukio**
**10-356 Maedacho**
**Niihama-shi (JP)**
Inventor: **Kurozu, Shinichi**
**11-41 Maedacho**
**Niihama-shi (JP)**

(74) Representative: **Evans, David Charles et al**
**F.J. CLEVELAND & COMPANY 40-43, Chancery Lane**
**London, WC2A 1JQ (GB)**

# 0 108 501

**Description**

The present invention relates to an improved method for producing a reactivity promoted carbonaceous reducing agent used for direct reduction of iron ore which comprises grinding and mixing the carbonaceous reducing agent with an alkaline earth metal compound and agglomerating the resulting mixture to produce the reactivity promoted carbonaceous solid reductant of a desired grain size.

Petroleum coke is used as a carbonaceous reducing agent in the direct reduction of iron ore because carbon monoxide gas produced by the so called Boudouard reaction ($C+CO_2$—$2CO$) is used as a reductant.

The reaction rate of the Boudouard reaction varies with the kind of carbon sources used, and the result of the reactivity test according to JIS K-2151 shows that petroleum coke is not superior to coal. However, petroleum coke does have an advantage over coal in that it contains little ash. It is therefore clear that petroleum coke would be a more desirable reductant than coal if only the above reactivity is improved.

For this purpose, various studies have been made, and for example, consideration has been given to the addition of alkaline earth metal compounds of a known type for this purpose. A method for the improvement of the reactivity of petroleum coke by incorporating said compounds or impregnating with said compounds was proposed in Japanese Patent Application Kokai (Laid Open) No: 101190/1983 and in Japanese Patent Application No: 113860/1982. Further another process which utilizes the Bouduouard reaction is disclosed in US—A—2380406. This disclosure reveals a method for the reduction of iron ore which comprises grinding and mixing a carbonaceous reducing compound with an alkaline earth metal compound and utilizing the same as a reductant. Thus in this disclosure an ore is heated with a mixture derived from a carbonaceous reducing agent and selected alkaline earth metal compounds to achieve simultaneous desulfurisation and reduction of metallic ores. The mixture, prior to use, is precalcined by heating to an elevated temperature in the absence of oxygen. The resultant mixture is then cooled, ground and intimately admixed with finely divided iron ore. The present invention is characterized in that the carbonaceous reducing agent and the alkaline earth metal compound are first ground and agglomerated with or without the application of heat, to produce a granular reductant mixture, without calcining at an elevated temperature in the absence of oxygen, which is then directly used in the Boudouard reaction.

Explanation will be given hereinbelow by way of illustration only with reference to the examples embodying the present invention.

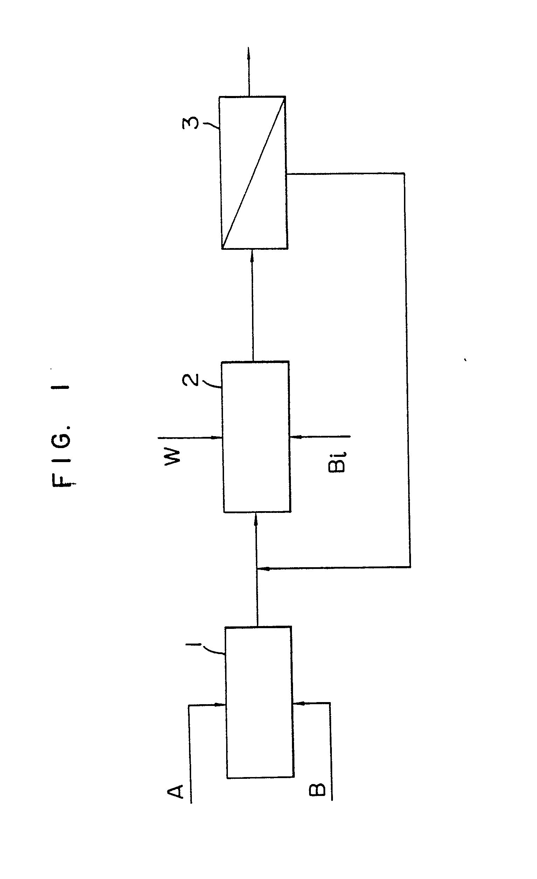

In Figure 1, petroleum coke A and an alkaline earth metal compound B are introduced into a grinding/mixing apparatus 1 wherein both are ground to a gain size suitable for agglomeration and at the same time mixed at a required mixing ratio. The resulting mixture is then transferred to an agglomerating apparatus 2. In the apparatus 2, said mixture is agglomerated to a grain size of 1 mm or more and then transferred, via a screen 3, from which agglomerates having a grain size of 1 mm or more are charged into a reduction furnace. Agglomerates having grain size of less than 1 mm are returned to the agglomerating apparatus 2. The agglomerating apparatus 2 may be any of pelletizers, extruders and briquetting machines to which water W and a binder Bi may be added as required. In addition, the agglomerating apparatus 2 is sometimes heated for facilitating agglomeration.

The following is a reactivity test of agglomerates according to the present invention.

Test Exampple (1):
(1) Agglomerating condition
    (a) Material
        Petroleum coke (grain size, 1 mm minus)

|  | Total carbon | Sulfur | Fixed carbon | Volatile matter | Ash |
|---|---|---|---|---|---|
| Wt(%) | 90.0 | 4.64 | 85.9 | 14.0 | 0.1 |

Limestone (grain size, 0.25 mm minus)

|  | CaO | MgO | $Al_2O_3+$ $SiO_2$ | Loss on ignition |
|---|---|---|---|---|
| Wt(%) | 55.31 | 0.97 | 0.2 | 43.53 |

Quick lime (grain size, 0.25 mm minus)

|  | CaO | MgO | $Al_2O_3+$ $SiO_2$ | Loss on ignition |
|---|---|---|---|---|
| Wt(%) | 97.5 | — | 0.3 | 1.0 |

**0 108 501**

(b) Agglomerating condition
  (i) Agglomerating apparatus     extruder
  (ii) Agglomerating condition
    Added water     10 wt(%) (based on dry coke)
    Mixing condition (weight ratio)
      dry coke/limestone=100/13.32
      dry coke/quick lime=100/7.56
    No binder

(2) Product
  (a) Calcium content (dry basis)

| | Ca wt(%) |
|---|---|
| Petroleum coke+limestone | 4.25 |
| Petroleium coke+quick lime | 3.52 |

  (b) Grain size     3 mm or more


Test Example (2):
(1) Agglomerating condition
  (a) Material
    Petroleum coke (grain size, 0.5 mm minus)

| | Total carbon | Sulfur | Fixed carbon | Volatile matter | Ash |
|---|---|---|---|---|---|
| Wt(%) | 91.9 | 3.95 | 83.48 | 15.78 | 0.74 |

Barium hydroxide, $Ba(OH)_2 \cdot 8H_2O$ — Reagent

| | Barium hydroxide | Carbonate (as $BaCO_3$) | Iron |
|---|---|---|---|
| Wt(%) | >97 | 3> | 0.001> |

Dolomite (grain size, 0.25 mm minus)

| | CaO | MgO | $Al_2O_3+$ $SiO_2$ | Loss on ignition |
|---|---|---|---|---|
| Wt(%) | 36.51 | 14.97 | 0.47 | 46.42 |

  (b) Agglomerating condition
    (i) Agglomerating apparatus     extruder
    (ii) Agglomerating condition
      Added water     15 wt(%) (based on dry coke)
      Mixing condition
        Dry coke/Barium hydroxide=100/5.0
        Dry coke/Dolomite=100/11.4
      No binder

(2) Product
  (a) Chemical analysis (dry basis)
    Petroleum coke+Barium hydroxide     2.60 wt.% Ba
    Petroleum coke+Dolomite              2.69 wt.% Ca
                                         1.17 wt.% Mg

  (b) Grain size     3 mm or more


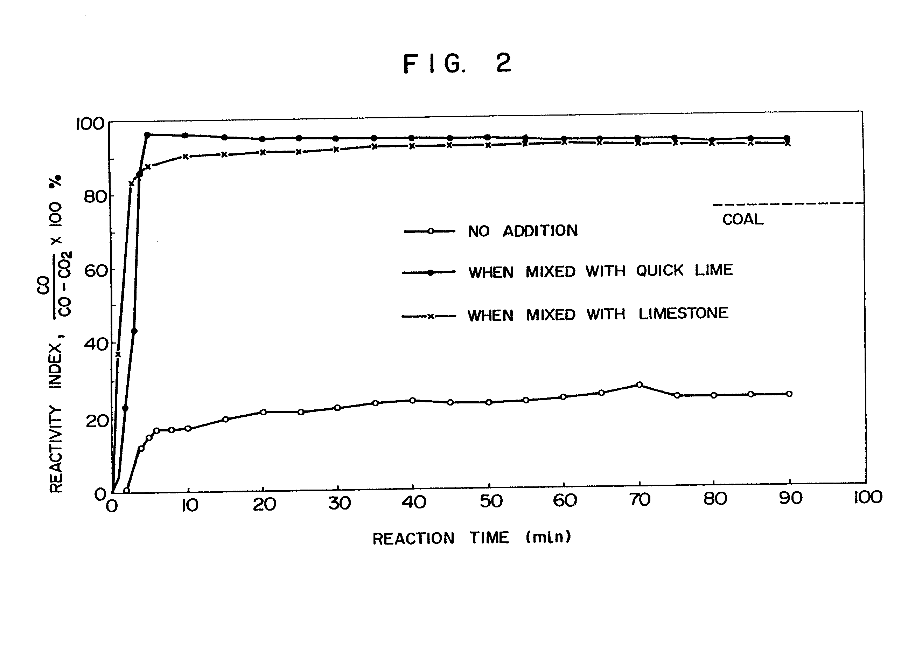

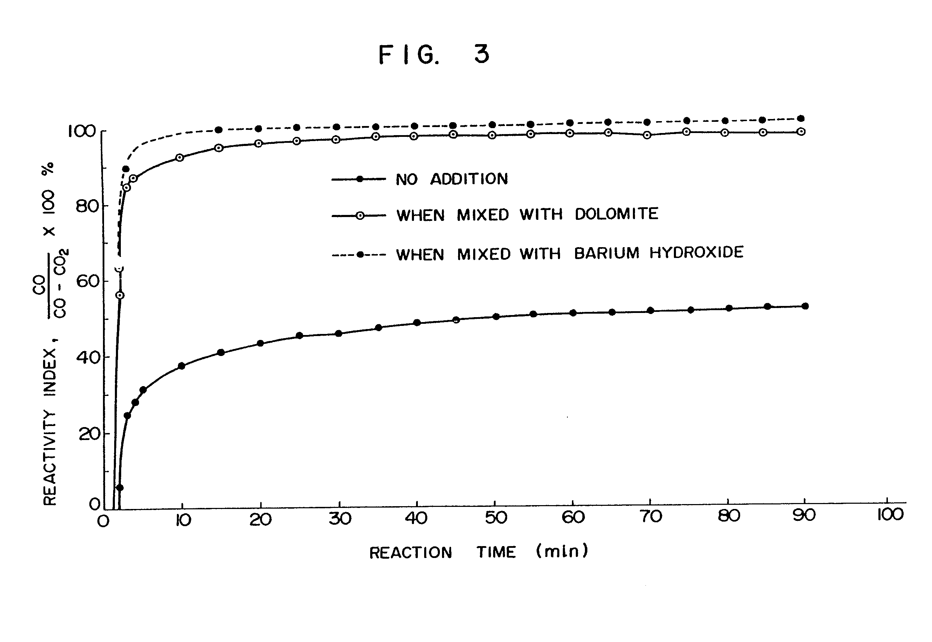

The results of reactivity tests for a reductant produced under the foregoing conditions are shown in Fig. 2 and Fig. 3. Fig. 2 and Fig. 3 are a graphs illustrating the results of the reactivity tests, and the reactivity of reductant referred to herein means reactivity with carbon dioxide in the Boudouard reaction. The reactivity tests were carried out according to JIS K-2151, and the reactivity index is expressed by the following equation:

3

# 0 108 501

$$\text{Reactivity index} = \frac{CO}{CO + CO_2} \times 100 \ (\text{mole \%})$$

As apparent from these graphs, the reactivity of petroleum coke is remarkably improved by adding limestone, quick lime, dolomite or barium hydroxide to the coke.

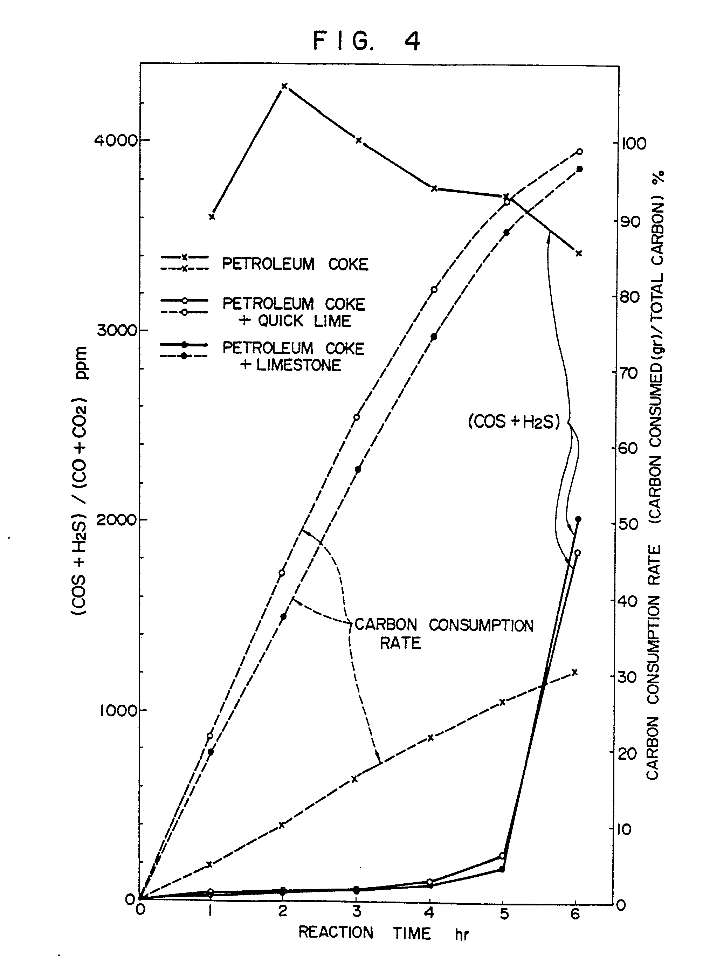

Further, in the present invention, the generation of gaseous sulfur compounds can be inhibited by adding a Ca compound to the coke. The test result thereof is shown in Fig. 4. In this test, sulfur compounds ($H_2S+COS$) in the exhaust gas from the foregoing reactivity test were detected. As apparent from this figure, it is seen that the formation of gaseous sulfur compounds is remarkably reduced.

By increase in the reactivity of the reductant, operation of the reduction furnace at low temperatures becomes possible, and besides, by reduction in gaseous sulfur compounds, exhaust gas treatment of the process becomes easy.

As described above, the present invention has advantages that a reductant having a high reactivity and generating few gaseous sulfur compounds can be obtained, and besides that the amount of alkaline earth metal compound in the agglomerates can be easily changed. This makes it possible to regulate the reactivity and besides to determine the optimum amount of alkaline earth metal compound according to the sulfur content of solid reactant, especially petroleum coke.

## Claims

1. A method for the reduction of iron ore using the Boudouard reaction, which method comprises, grinding and mixing a carbonaceous reducing compound with an alkaline earth metal compound and utilizing the same as a reductant characterized in that the carbonaceous reducing compound and the alkaline earth metal compound are first ground and agglomerated with or without the application of heat, to produce a granular reductant mixture, without calcining at an elevated temperature in the absence of oxygen, which is then directly used in the Boudouard reaction.

2. A method according to claim 1 wherein the carbonaceous reducing compound and the alkaline earth metal compound are agglomerated to a grain size of not less than 1 mm.

3. A method according to either of the foregoing claims wherein the carbonaceous reducing agent is petroleum coke.

4. A method according to any preceding claim wherein the alkaline earth metal compound is a calcium of barium compound.

5. A method according to claim 4 wherein the calcium compound is quick lime or limestone.

6. A method according to claim 4 wherein the barium compound is barium hydroxide.

7. A method according to either of claims 5 or 6 wherein the grain size is at least 3 mm.

## Patentansprüche

1. Verfahren zur Reaktion von Eisenerz unter Ausnutzung der Boudouard-Reaktion unter Vermahlen und Vermischen einer kohleartigen reduzierenden Verbindung mit einer Erdalkalimetallverbindung und Verwendung derselben als Reduktionsmittel, dadurch gekennzeichnet, daß die kohleartige reduzierende Verbindung und die Erdalkalimetallverbindung zunächst vermahlen und gegebenenfalls unter Wärmeanwendung agglomeriert werden, um — ohne Calcinieren bei erhöhter Temperatur in Abwesenheit von Sauerstoff — ein direkt bei der Boudouard-Reaktion zu verwendendes körniges Reduktionsmittelgemisch herzustellen.

2. Verfahren nach Anspruch 1, dadurch gekennzeichnet, daß die kohleartige reduzierende Verbindung und die Erdalkalimetallverbindung auf eine Korngröße von nicht weniger als 1 mm agglomeriert werden.

3. Verfahren nach einem der vorhergehenden Ansprüche, dadurch gekennzeichnet, daß die kohleartige reduzierende Verbindung Erdölkoks ist.

4. Verfahren nach einem der vorhergehenden Ansprüche, dadurch gekennzeichnet, daß die Erdalkalimetallverbindung eine Calcium- oder Bariumverbindung ist.

5. Verfahren nach Anspruch 4, dadurch gekennzeichnet, daß die Calciumverbindung gebrannter Kalk oder Kalkstein ist.

6. Verfahren rach Anspruch 4, dadurch gekennzeichnet, daß die Bariumverbindung Bariumhydroxid ist.

7. Verfahren nach einem der Ansprüche 5 oder 6, dadurch gekennzeichnet, daß die Korngröße mindestens 3 mm beträgt.

## Revendications

1. Procédé pour la réduction de minerai de fer au moyen de la réaction de Boudouard, lequel procédé comprend le broyage et le mélange d'un composé réducteur carboné avec un composé d'un métal alcalino-terreux, et l'utilisation de ce mélange en tant que réducteur, caractérisé en ce que l'on broie d'abord et agglomère le composé réducteur carboné et le composé de métal alcalino-terreux, avec ou sans

4

apport de chaleur, pour obtenir un mélange réducteur granulaire, sans calcination à une température élevée en absence d'oxygène, que l'on utilise ensuite directement dans la réaction de Boudouard.

2. Procédé selon la revendication 1, dans lequel le composé réducteur carboné et le composé de métal alcalino-terreux sont agglomérés jusqu'à une taille de grains de 1 mm au moins.

3. Procédé selon l'une quelconque des revendications précédentes, dans lequel l'agent réducteur carboné est du coke de pétrole.

4. Procédé selon l'une quelconque des revendications précédentes, dans lequel le composé de métal alcalinoterreux est un composé de calcium ou be baryum.

5. Procédé selon la revendication 4, dans lequel le composé de calcium est la chaux vive ou le calcaire.

6. Procédé selon la revendication 4, dans lequel le composé de baryum est l'hydroxyde de baryum.

7. Procédé selon l'une quelconque des revendications 5 ou 6, dans lequel la taille des grains est d'au moins 3 mm.

FIG. 1

A

B

W

Bi

1

2

3

0 108 501

# F I G. 2

REACTIVITY INDEX, $\dfrac{CO}{CO-CO_2} \times 100 \%$

REACTION TIME (mln)

COAL

—○— NO ADDITION

—●— WHEN MIXED WITH QUICK LIME

—×— WHEN MIXED WITH LIMESTONE

0 108 501

# FIG. 3

REACTION TIME (min)

REACTIVITY INDEX, $\dfrac{CO}{CO - CO_2} \times 100\ \%$

● NO ADDITION

○ WHEN MIXED WITH DOLOMITE

● WHEN MIXED WITH BARIUM HYDROXIDE

0 108 501

3

# F I G. 4